# EUROPÄISCHE PATENTSCHRIFT

(11) **EP 4 172 546 B1**
(45) Veröffentlichungstag und Bekanntmachung des Hinweises auf die Patenterteilung: **05.06.2024**
(21) Anmeldenummer: 21733059.6
(22) Anmeldetag: 10.06.2021
(51) Int. Cl.: F28D 9/00, B33Y 10/00, B33Y 80/00, F28F 3/02, F28F 9/02, F28D 21/00

(54) **VERFAHREN ZUR HERSTELLUNG EINES RIPPEN-PLATTEN-WÄRMETAUSCHERS UND RIPPEN-PLATTEN-WÄRMETAUSCHER**
METHOD OF MANUFACTURING A FIN PLATE HEAT EXCHANGER AND FIN PLATE HEAT EXCHANGER
PROCÉDÉ DE FABRICATION D'UN ÉCHANGEUR DE CHALEUR À PLAQUE À NERVURES ET ÉCHANGEUR DE CHALEUR À PLAQUE À NERVURES

(30) Priorität: 24.06.2020 EP 20020293
(43) Veröffentlichungstag der Anmeldung: 03.05.2023
(73) Patentinhaber: Linde GmbH, 82049 Pullach (DE)
(72) Erfinder: DAHMEN, Rolf, 81369 München (DE); HÖLZL, Reinhold, 82538 Geretsried (DE); SCHÖNBERGER, Manfred, 83342 Tacherting (DE); WIMMER, Georg, 84577 Tüßling (DE); SCHATZ, Kati, 80999 München (DE)
(74) Vertreter: Meilinger, Claudia Sabine
(86) Internationale Anmeldenummer: PCT/EP2021/025206
(87) Internationale Veröffentlichungsnummer: WO 2021/259516

(56) Entgegenhaltungen:
- WO-A1-2016/062396
- DE-A1-102008 029 115
- JP-U- H0 665 775
- US-A1- 2019 024 989
- US-A1- 2019 285 363

## Beschreibung

Die Erfindung betrifft ein Verfahren zur Herstellung eines Rippen-Platten-Wärmetauschers sowie einen entsprechend hergestellten Rippen-Platten-Wärmetauscher gemäß den Oberbegriffen der unabhängigen Patentansprüche.

### Stand der Technik

Die vorliegende Erfindung betrifft gelötete Rippen-Platten-Wärmetauscher aus Aluminium (Brazed Aluminium Plate-Fin Heat Exchangers, PFHE; Bezeichnungen gemäß der deutschen und englischen Ausgabe der ISO 15547-2:3005), wie sie in einer Vielzahl von Anlagen bei unterschiedlichsten Drücken und Temperaturen eingesetzt werden. Entsprechende Wärmetauscher finden beispielsweise Anwendung bei der Tieftemperaturzerlegung von Luft, bei der Verflüssigung von Erdgas oder in Anlagen zur Herstellung von Ethylen. Ist nachfolgend verkürzend von einem "Wärmetauscher" oder "Plattenwärmetauscher" die Rede, sei hierunter stets ein entsprechender (hart-) gelöteter Rippen-Platten-Wärmetauscher aus Aluminium verstanden. Es versteht sich, dass "Aluminium" dabei auch eine Aluminiumlegierung bezeichnen kann.

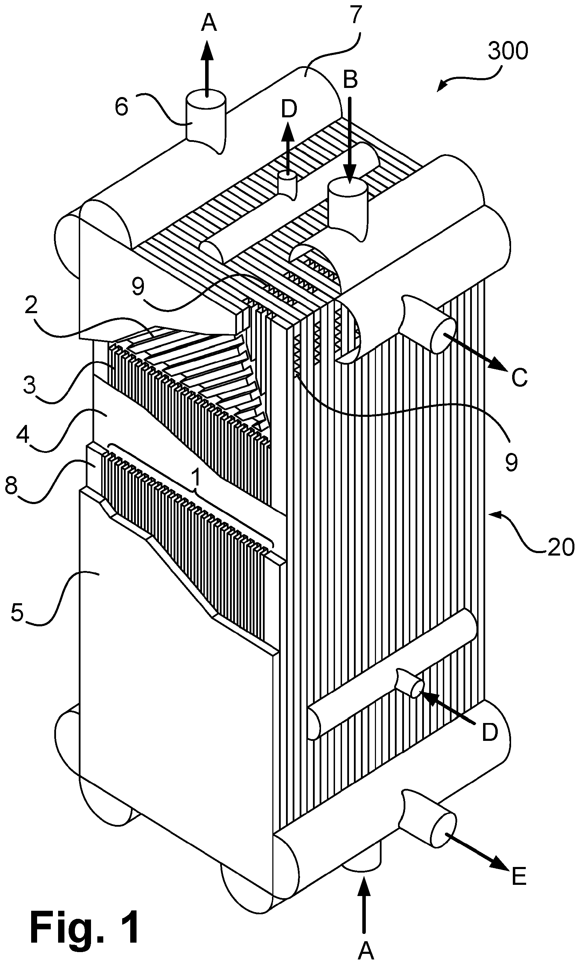

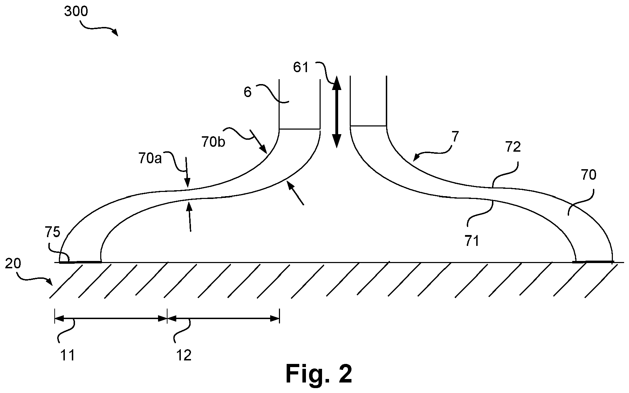

Gelötete Rippen-Platten-Wärmetauscher aus Aluminium sind in Figur 2 der erwähnten ISO 15547-2:3005 sowie auf Seite 5 der Veröffentlichung "The Standards of the Brazed Aluminium Plate-Fin Heat Exchanger Manufacturers' Association" der ALPEMA, 3. Auflage 2010, gezeigt und beschrieben. Eine Abbildung, die im Wesentlichen den dortigen Abbildungen entspricht, ist in der beigefügten Figur 1 als Stand der Technik dargestellt und wird im Folgenden vorab erläutert.

Der in Figur 1 teilweise eröffnet dargestellte Plattenwärmetauscher 300 gemäß dem Stand der Technik dient dem Wärmeaustausch von im dargestellten Beispiel fünf verschiedenen Prozessmedien A bis E.

Zum Wärmeaustausch zwischen den Prozessmedien A bis E umfasst der Plattenwärmetauscher 300 dabei eine Vielzahl von parallel zueinander angeordneten Trennblechen 4 (in den zuvor genannten Veröffentlichungen, auf die sich auch die nachfolgenden Angaben in Klammern beziehen, im Englischen als Parting Sheets bezeichnet), zwischen denen durch Strukturbleche mit Lamellen 3 (Fins) definierte Wärmeaustauschpassagen 1 für jeweils eines der Prozessmedien A bis E, die dadurch in Wärmeaustausch miteinander treten können, ausgebildet sind.

Die Strukturbleche mit den Lamellen 3 sind typischerweise gefaltet bzw. gewellt ausgebildet, wobei durch die Faltungen bzw. Wellen jeweils Strömungskanäle gebildet werden, wie auch in Figur 1 der ISO 15547-2:3005 gezeigt. Die Bereitstellung der Strukturbleche mit Lamellen 3 bietet im Vergleich zu Plattenwärmetauschern ohne Lamellen den Vorteil einer verbesserten Wärmeübertragung, einer gezielteren Fluidführung und einer Erhöhung der mechanischen (Zug-)Festigkeit. In den Wärmeaustauschpassagen 1 strömen die Prozessmedien A bis E insbesondere durch die Trennbleche 4 getrennt voneinander, können ggf. aber im Fall von perforierten Strukturblechen mit Lamellen 3 durch letztere hindurchtreten.

Die einzelnen Passagen 1 bzw. die Strukturbleche mit den Lamellen 3 sind seitlich jeweils durch sogenannte Sidebars 8 umgeben, die jedoch Einspeise- und Entnahmeöffnungen 9 freilassen. Die Sidebars 8 halten die Trennbleche 4 auf Abstand und sorgen für eine mechanische Verstärkung des Druckraumes. Zum Abschluss an zumindest zwei Seiten dienen insbesondere verstärkt ausgebildete Deckbleche 5 (Cap Sheets), die parallel zu den Trennblechen 4 angeordnet sind.

Mittels sogenannter Header 7, die mit Stutzen 6 (Nozzles) versehen sind, werden die Prozessmedien A bis E über Einspeise- und Entnahmeöffnungen 9 zu- und abgeführt. Im Eingangsbereich der Passagen 1 befinden sich weitere Strukturbleche mit sogenannten Verteilerlamellen 2 (Distributor Fins), die für eine gleichmäßige Verteilung auf die gesamte Breite der Passagen 1 sorgen. In Strömungsrichtung gesehen am Ende der Passage 1 können sich weitere Strukturbleche mit Verteilerlamellen 2 befinden, die die Prozessmedien A bis E aus den Passagen 1 in die Header 7 führen, wo sie gesammelt und über die entsprechenden Stutzen 6 abgezogen werden.

Durch die Strukturbleche mit den Lamellen 3, die weiteren Strukturbleche mit den Verteilerlamellen 2, die Sidebars 8, die Trennbleche 4 und die Deckbleche 5 wird insgesamt ein hier quaderförmiger Wärmetauscherblock 20 gebildet, wobei unter einem "Wärmetauscherblock" hier die genannten Elemente ohne die Header 7 und Stutzen 6 in einem miteinander verbundenem Zustand verstanden werden sollen. Wie in Figur 1 nicht veranschaulicht, kann der Plattenwärmetauscher 300 insbesondere aus Fertigungsgründen aus mehreren entsprechenden quaderförmigen und miteinander verbundenen Wärmetauscherblöcken 20 ausgebildet sein.

Entsprechende Plattenwärmetauscher 300 werden aus Aluminium hartgelötet. Die einzelnen Passagen 1, umfassend die Strukturbleche mit den Lamellen 3, die weiteren Strukturbleche mit den Verteilerlamellen 2, die Deckbleche 5 und die Sidebars 8 werden dabei, jeweils mit Lot versehen, aufeinander gestapelt bzw. entsprechend angeordnet und in einem Ofen erwärmt. Auf den in dieser Weise hergestellten Wärmetauscherblock 20 werden die Header 7 und die Stutzen 6 aufgeschweißt. Die Header 7 werden unter Verwendung von halbzylindrischen Strangpressprofilen hergestellt, die auf die erforderliche Länge gebracht und dann auf den Wärmetauscherblock 20 aufgeschweißt werden.

Die DE 10 2008 029 115 A1 bildet den jeweiligen Oberbegriff der unabhängigen Patentansprüche.

Durch die Größe und Geometrie des Lötofens wird in einem derartigen Herstellungsverfahren auch die maximale Größe des Wärmetauscherblocks vorgegeben. Oft verlangen jedoch Prozesse eine größere Wärmeaustauschfläche und somit größere Wärmetauscherblöcke als in einem derartigen Ofen gefertigt werden können. Um diesen Anforderungen gerecht zu werden, wird auf Seite 6 unter 1.2.3 des vorgenannten ALPEMA-Veröffentlichung vorschlagen, zwei oder mehrere Wärmetauscherblöcke durch Schweißen miteinander zu verbinden, um damit einen zusammengesetzten Wärmetauscherblock mit erhöhter Stapelhöhe zu erhalten.

Die vorliegende Erfindung stellt sich die Aufgabe, die Herstellung eines Rippen-Platten-Wärmetauschers zu verbessern und einen Rippen-Platten-Wärmetauscher mit verbesserten Eigenschaften zu erhalten.

### Offenbarung der Erfindung

Vor diesem Hintergrund schlägt die vorliegende Erfindung ein Verfahren zur Herstellung eines Rippen-Platten-Wärmetauschers sowie einen entsprechend hergestellten Rippen-Platten-Wärmetauscher gemäß mit den jeweiligen Merkmalen der unabhängigen Patentansprüche vor. Ausgestaltungen sind jeweils Gegenstand der abhängigen Patentansprüche und der nachfolgenden Beschreibung.

Die vorliegende Erfindung beruht auf der Erkenntnis, dass mittels additiver Fertigung eine vorteilhafte Herstellung von Headern von Rippen-Platten-Wärmetauschern möglich ist, wobei die entsprechend hergestellten Header mit besonders vorteilhaften mechanischen und fluidtechnischen Merkmalen bereitgestellt werden können und erfindungsgemäß mit solchen Eigenschaften hergestellt werden.

Erfindungsgemäß wird dabei ein Verfahren zur Herstellung eines Rippen-Platten-Wärmetauschers vorgeschlagen, bei dem ein Wärmetauscherpassagen aufweisender Wärmetauscherblock bereitgestellt wird, und bei dem auf den Wärmetauscherblock ein Header aufgebracht wird, wobei der Header zumindest zum Teil unter Verwendung eines additiven Fertigungsverfahrens ausgebildet wird. Erfindungsgemäß ist vorgesehen, dass zumindest ein Abschnitt einer Querschnittslinie einer Wandfläche des Headers an einer Querschnittsposition einen von einem Kreisabschnitt und von einem Ellipsenabschnitt abweichenden, gekrümmten Verlauf aufweist. Der von einem Kreisabschnitt und von einem Ellipsenabschnitt abweichende, gekrümmte Verlauf kann dabei insbesondere ein Verlauf sein, der im Wesentlichen einem Abschnitt einer oder mehrerer Parabeln folgt, und wird nachfolgend entsprechend beschrieben. Der Vorteil der vorliegenden Erfindung ist jedoch, dass durch den Einsatz der vorliegenden Erfindung keine Beschränkung auf bestimmte geometrische Formen mehr gegeben ist, sondern die Headerform frei von den verfügbaren Formen von Bauteilen wie beispielsweise Strangguss- oder -pressprofilen hergestellt werden kann. Anstelle von Parabeln sind grundsätzlich auch andere Polynomfunktionen oder Abschnitte von Sinuskurven, beispielsweise zwischen Maximum und Minimum, einsetzbar.

Generell soll, wen hier von "einem" Header, "einer" Querschnittsfläche oder "einem" anderen Element im Singular die Rede ist, nicht ausgeschlossen sein, dass auch mehrere Header, Querschnittsflächen oder andere Elemente vorhanden sind, es sei denn, dies wird ausdrücklich erwähnt. Die Verwendung des Singular dient lediglich zur Vereinfachung der Beschreibung.

Ist hier davon die Rede, dass zumindest ein Abschnitt einer Querschnittslinie einer Wandfläche des Headers an einer Querschnittsposition im Wesentlichen einem bestimmten Verlauf folgt, soll durch die Angabe "im Wesentlichen" insbesondere ausgedrückt werden, dass ein entsprechender Verlauf innerhalb der technischen Toleranzgrenzen des Herstellungsverfahrens hervorgebracht wird, und dass geringfügige Abweichungen von beispielsweise bis zu 1, 2 oder 3 mm ohne weiteres toleriert werden können, ohne den Grundprinzipien der Erfindung zuwider zu laufen.

Der hier verwendete Begriff "Querschnittslinie" stellt eine Schnittlinie einer entsprechenden Wandfläche mit einer Schnittebene dar. Die Querschnittslinie liegt damit in der Schnittebene. Die "Querschnittsposition" stellt eine Position eines Querschnitts durch den Header senkrecht zu dessen Längserstreckung dar. Mehrere Querschnittspositionen entsprechen parallelen Schnittebenen senkrecht zur Längserstreckung des Headers.

Im Gegensatz zur herkömmlichen Fertigung von Headern aus im Querschnitt halbkreisförmigen Profilen kann durch den Einsatz des erfindungsgemäßen Verfahrens die Form der Header gezielt an die strömungstechnischen Erfordernisse angepasst und auf diese Weise strömungsoptimiert werden. Auf diese Weise kann im Rahmen der vorliegenden Erfindung insbesondere eine gleichmäßigere Durchströmung des Wärmetauscherblocks ohne unterschiedliche oder nennenswert unterschiedliche Strömungsgeschwindigkeiten erzielt werden. Durch die im Rahmen der vorliegenden Erfindung mögliche Einflussnahme auf die Strömung im Header kann insbesondere auch verhindert werden, dass sich Bereiche langsamer bzw. keiner Durchströmung, also sogenannte Toträume, ergeben, die zu einer Entmischung von Fluiden, die durch den Header geführt werden, führen könnte. Ein weiterer Vorteil, der durch den Einsatz der vorliegenden Erfindung erzielt werden kann, ist die Reduktion von abrupten Übergängen, beispielsweise zwischen dem in den Header mündenden Stutzen und dem Header selbst. Hierdurch können beispielsweise Verwirbelungen und auf diese zurückzuführende negative Effekte reduziert werden.

Der parabelförmige bzw. zumindest einem Abschnitt einer Parabel folgende Verlauf stellt dabei das strömungstechnische Optimum dar. Damit wäre auch ein geringerer Druckverlust beim Ein- bzw. Ausströmen möglich, was unmittelbar einer Energie- und damit Kosteneinsparung zugeordnet werden kann. Auch bezüglich des Kraftflusses ergeben sich Vorteile, weil durch einen homogeneren Querschnittsübergang kleinere Spannungserhöhungen resultieren. Dies wirkt sich günstig auf die Wandstärken bei der statischen Auslegung aus und beim Ermüdungsfestigkeitsnachweis ergibt sich eine höhere Lebensdauer.

Im Rahmen der vorliegenden Erfindung kann die entsprechend ausgebildete Wandfläche eine Wandinnenfläche und/oder eine Wandaußenfläche des Headers sein. Eine "Wandinnenfläche" soll dabei hier die dem Fluid zugewandte Seite bezeichnen, die "Wandaußenfläche" bildet die der Umgebung zugewandte Seite. Wie auch nachfolgend noch erwähnt, können die Wandinnenfläche und die Wandaußenfläche in gleichem Abstand zueinander ausgebildet sein, so dass die beiden Flächen in diesem Fall im Wesentlichen dem gleichen Verlauf (ggf. entsprechend skaliert) folgen. Es kann aber auch ein unterschiedlicher Abstand vorgesehen sein, der zu unterschiedlichen Wandstärken führt. In diesem Fall können ebenfalls die beiden Flächen mit entsprechenden Verläufen folgen. Die Ausbildung mit einem entsprechenden Verlauf kann sich aber auch insbesondere nur auf die Wandinnenfläche, die den Strömungsquerschnitt des Headers definiert, beschränken.

Die erwähnte Querschnittsposition kann insbesondere eine Position eines Querschnitts durch den Header an einer Einmündung eines Stutzens in den Header sein. Insbesondere an dieser Stelle, an der eine Einspeisung von Fluid in den Header oder eine Entnahme von Fluid hieraus erfolgt, kann die strömungstechnisch vorteilhafte Ausgestaltung ihre vorteilhaften Eigenschaften entfalten, da das aus dem Stutzen in den Header eintretende Fluid nicht schlagartig in einen Bereich mit größerem Querschnitt überführt werden muss, sondern entsprechende abrupte Übergänge durch die vorgeschlagene Krümmung abgefedert werden können. Entsprechendes gilt in umgekehrtem Sinne auch für die Ausspeisung von Fluid aus dem Header, d.h. die Entnahme von entsprechendem Fluid über einen Stutzen.

In einer besonders vorteilhaften Ausführungsform der vorliegenden Erfindung ist der von einem Kreisabschnitt und von einem Ellipsenabschnitt abweichende, gekrümmte Verlauf ein Verlauf, der einen ersten Krümmungsbereich mit einer ersten Krümmungsrichtung und einen zweiten Krümmungsbereich mit einer zweiten Krümmungsrichtung aufweist, wobei die erste Krümmungsrichtung und die zweite Krümmungsrichtung einander entgegengesetzt sind. Die beiden Krümmungsbereiche können übergangslos ineinander übergehen und auf diese Weise einen S-förmigen Verlauf bilden. Auch dazwischengeschaltete weitere Abschnitte können vorgesehen sein. Auf diese Weise kann, insbesondere in Bereichen von Stutzen wie soeben erwähnt, eine besonders vorteilhafte Fluidführung erzielt werden, da sich der Header ausgehend vom Stutzen nur langsam bzw. mit einem auf die jeweiligen Strömungsbedingungen einstellbaren Krümmungsverlauf erweitert.

In einer besonders vorteilhaften Ausgestaltung der soeben erläuterten Ausführungsform können der erste Krümmungsbereich und der zweite Krümmungsbereich jeweils im Wesentlichen entlang von Abschnitten von Parabelästen verlaufen, deren scheitelpunktsferne Enden einander zugewandt sind. Ein Parabelast verläuft dabei gemäß der hier verwendete Definition ausgehend vom Scheitelpunkt, der Scheitelpunkt selbst muss aber nicht notwendigerweise Teil der jeweiligen Abschnitte der Parabeläste sein. Ist letzteres der Fall, ist das hier als "scheitelpunktsfernes" Ende bezeichnete Ende weiter weg von dem gedachten Scheitelpunkt angeordnet. Der Verlauf ist also, mit anderen Worten, derart, dass ein Bereich einer stärkeren Krümmung in der ersten Krümmungsrichtung kontinuierlich, und dem Verlauf des einen Parabelasts folgend, in einen Bereich geringerer Krümmung übergeht, dass sich dann, unmittelbar oder nach einem Zwischenabschnitt, die Krümmungsrichtung umkehrt, und dass der Verlauf bzw. die Querschnittslinie dann wieder von einem ein Bereich einer geringeren Krümmung in der zweiten Krümmungsrichtung, dem anderen Parabelast folgend, in einen Bereich stärkerer Krümmung übergeht. Eine entsprechende Ausgestaltung ist insbesondere in Bezug auf Figur 2 erläutert.

Abweichend von der Ausgestaltung im Bereich der Stutzen kann der Header in einer besonders bevorzugten Ausgestaltung der vorliegenden Erfindung unter Verwendung des additiven Fertigungsverfahrens derart ausgebildet werden, dass eine Wandfläche des Headers an einer weiteren Querschnittsposition außerhalb eines Bereichs des Stutzens lediglich eine Krümmung in einer Krümmungsrichtung aufweist.

In einer weiteren bevorzugten Ausgestaltung der vorliegenden Erfindung kann der Header unter Verwendung des additiven Fertigungsverfahrens derart ausgebildet sein, eine Wand des Headers entlang ihres Verlaufs im Querschnitt, aber auch ggf. im Längsschnitt, unterschiedliche Wandstärken aufweist. Auf diese Weise kann durch die vorliegende Erfindung ein entsprechender Rippen-Platten-Wärmetauscher besonders stabil und materialsparend erstellt werden. Beispielsweise kann in Bereichen geringerer Krümmung eine größere Materialstärke eingesetzt werden als in Bereichen höherer Krümmung, da letztere bereits durch die Krümmung mechanisch stabilisiert sind. Entsprechend kann auch im Bereich geringerer wirkender Drücke oder Anströmgeschwindigkeiten die Materialstärke reduziert werden.

Die erwähnten unterschiedlichen Wandstärken können im Rahmen der vorliegenden Erfindung unter Verwendung unterschiedlicher, unter Verwendung des additiven Fertigungsverfahrens aufgebrachter Materialmengen oder unter Verwendung eines vor der Durchführung des additiven Fertigungsverfahrens bereitgestellten Wandverstärkungselements bzw. eines nachfolgend als "Stützstruktur" bezeichneten Elements bereitgestellt werden, die nach der Fertigung im Header verbleibt.

In anderen Ausgestaltungen der vorliegenden Erfindung und nicht erfindungsgemäßen Ausgestaltungen kann eine entsprechende Stützstruktur auch dazu verwendet werden, die Aufbringung des Materials bei dem additiven Fertigungsverfahren zu verbessern und zu erleichtern und auf diese Weise geometrisch vorteilhafte Strukturen zu schaffen. Bei Headern, die durch additive Fertigung der hier in Frage kommenden Art aufgebaut werden, ist das Schließen einer vorgegebenen Halbschalenstruktur ggf. nur mit vergleichsweise hohem apparativem Fertigungsaufwand oder durch aufwändig gestaltete, z.B. nach oben spitz zulaufende Strukturen zu bewerkstelligen. Sollte dies der Fall sein, kann eine Stützstruktur die Ausbildung erleichtern. Ferner kann bei Headern aus AlMg- oder AlMgMn-Legierungen mit Mg-Gehalten von mehr als 2 % im Schweißbereich insbesondere bei der für große Wanddicken benötigten hohen Streckenenergie bei Hg-haltigen Medien ggf. das Problem von Hg-induzierter Spannungsrisskorrosion auftreten. Auch hier kann die Verwendung einer entsprechenden Stützstruktur vorteilhaft sein.

In allen Fällen kann es sich insbesondere um eine Stützstruktur handeln, die beispielsweise aus einem Aluminiumwerkstoff hergestellt sein kann. Dieser Aluminiumwerkstoff kann beispielsweise artähnlich oder artunähnlich zu dem restlichen Werkstoff des Headers sein. Unter "artähnlichen" Werkstoffen seien dabei insbesondere solche Werkstoffe verstanden, die ein gleiches oder vergleichbares Gefüge und/oder eine gleiche oder vergleichbare Wärmedehnung aufweisen, was dagegen bei "artunähnlichen" Materialen nicht der Fall ist. Artgleich sind beispielsweise unterschiedliche Kohlenstoffstähle. Artungleich sind beispielsweise Kohlenstoffstahl und Edelstahl aufgrund der unterschiedlichen Werkstoffstruktur (Gefüge und Wärmedehnung). Unter artähnlichen Materialien können auch verschiedene Aluminiumlegierungen verstanden, die aufgrund der Vielfalt der möglichen Legierungen zu großen Unterschieden in den mechanischen und thermischen Kennwerten führen. Artunähnlich kann z.B. die Verbindung eines Aluminiumwerkstoffes mit einem (Edel-) Stahlwerkstoff sein, die sich in vielerlei Hinsicht "nicht vertragen". Die Verbindung kann voll, teilweise oder gar nicht mit dem bei dem additiven Fertigungsverfahren verwendeten Material erfolgen, beispielsweise an dieses angeschmolzen werden. Die Stützstruktur kann im einfachsten Fall aus einem eingewalzten Blech, auch mehrteilig, zusammengeschweißt sein. Die Stützstruktur kann entweder verbleiben oder wird nach Fertigstellung des Headers entfernt. Eine innere Stützstruktur, die am Wärmetauscherblock vollständig durch Schweißen angebunden ist und die komplette Innenoberfläche des Headers umfasst, kann bei der Headerauslegung als tragend mit berücksichtigt werden.

Eine quecksilberresistente Ausgestaltung kann insbesondere dadurch erzielt werden, dass die Stützstruktur komplett an der gesamten Headerinnenseite so ausgeführt wird, dass das Medium im Innern des Headers nicht mit der additiv gefertigten äußeren Headerstruktur in Verbindung kommt. Hierbei kann beispielsweise ein Werkstoff für die Stützstruktur mit einem Mg-Gehalt von weniger als 2 % verwendet werden. Dies kann durch die Verwendung eines Zusatzwerkstoffes für die Schweißverbindungen an der Stützstruktur bzw. bei der Schweißverbindung zwischen Stützstruktur und Header mit einem Mg-Gehalt von weniger als 2 % unterstützt werden. Die additiv gefertigte Headerwandung, die nicht mit dem Medium in Berührung kommt, kann dagegen aus einer Legierung mit einem Mg-Gehalt von mehr als 2 % bestehen.

Durch den Einsatz einer Stützstruktur in erfindungsgemäßen und nicht erfindungsgemäßen Ausgestaltungen kann ein Header nach oben hin, d.h. in Richtung von dem Wärmetauscherblock weg, mittels additiver Fertigungsverfahren geschlossen werden, ohne dass zusätzliche aufwändige apparative Fertigungsmaßnahmen oder eine aufwändige Gestaltung mit nach oben spitz zulaufenden Headern erforderlich sind. Wie erwähnt, kann eine beispielsweise Hg-resistente (oder ggü. anderen Medienbestandteilen resistente) Innenhülle und eine höherfeste Außenwandung ausgebildet werden. Eine Ausbildung von Headern mit sehr großen Wanddicken bei kleinen Durchmessern ist ebenfalls möglich.

Die vorliegende Erfindung und nicht erfindungsgemäße Ausgestaltungen können mit weiteren Maßnahmen erfindungsgemäßer und nicht erfindungsgemäßer Art kombiniert werden. Eine vorteilhafte Ausgestaltung erfindungsgemäßer und nicht erfindungsgemäßer Ausführungsformen umfasst dabei insbesondere, dass der Header unter Verwendung des additiven Fertigungsverfahrens derart ausgebildet wird, dass die Wand des Headers an Stellen geringerer Krümmung und/oder an einer Anschlussstelle zu dem Wärmetauscherblock eine größere Wandstärke aufweist als in wenigstens einen anderen Bereich.

In einer Ausgestaltung kann dabei insbesondere ein Problem, das beim herkömmlichen Aufschweißen eines Headers von der Headeraußenseite auftritt, adressiert werden. Dies besteht in der Durchschweißung der vollen Wandstärke des Headers auf den Wärmetauscherblocks bzw. auf dort vorhandene Pufferlagen. Eine Nachbearbeitung der Schweißnaht von innen ist nicht möglich, auch ist die zerstörungsfreie Schweißnahtprüfung ist nur von außen möglich. Die Innenseite kann dabei wegen der unbehandelten Nahtwurzel verschwächt sein hinsichtlich der Tragfähigkeit bei statischen und insbesondere bei wechselnden Belastungen. Ermüdungseffekte können die Folge sein. Die Nahtwurzel weist i.d.R. eine Vielzahl von Endkratern auf, die für Wechselbelastung potentielle Anrissstellen darstellen. Dies kann insbesondere bei Rippen-Platten-Wärmeaustauschern in Luftzerlegungsanlagen mit lastflexiblem Betrieb nachteilig sein. In solchen Fällen führen die genannten Probleme ggf. zu einer Baubarkeitsgrenze bzw. Einsetzbarkeitsbeschränkung von gelöteten Rippen-Platten-Wärmeaustauschern.

Durch die Möglichkeit des Einsatzes der additiven Fertigung kann ein Header dagegen so auf den Wärmetauscherblock aufgebracht werden, dass die Verbindung zwischen Wärmetauscherblock und Header eindeutig ausgeführt ist und keine einseitig geschweißte, ggf. Ungänzen beinhaltende Naht darstellt und damit ermüdungstechnisch sehr viel besser bewertet werden kann. Somit führt ein additiv gefertigter Header zu deutlich höheren zulässigen Lastwechselzahlen und im Extremfall zur Einsetzbarkeit des Plattentauschers für diese Anwendung überhaupt.

Insbesondere können Art und Breite des Anschweißbereiches variabel ausgestaltet werden, mit konstanter Wanddicke oder mit variabler, sich verändernder Wanddicke. Dies kann weiterhin Spannungen reduzieren, was sich positiv auf die Gesamtlebensdauer auswirken kann. Weiterhin könnte ein geteilter Header ökonomischer hergestellt werden. Eine Teilung des Headers, z.B. je Modul, kann die Gesamtlebensdauer erhöhen. Ein weiterer Vorteil besteht darin, dass sowohl der gesamte Header wie auch Teile davon additiv gefertigt werden können, was auch eine Kostenersparnis bedeuten kann. Die mechanische Bearbeitung wie auch Prüfbarkeit der Headeranbindung ist vor Abschluss der additiven Fertigung des Header ebenfalls möglich, solange das Headerinnere noch zugänglich ist. Unter einem "Modul" werden dabei hier separat gefertigte Teilblöcke verstanden, die in an sich bekannter Weise zu einem gesamten Wärmetauscherblock zusammengefügt werden können. Hierbei kann beispielsweise pro Teilblock, oder für den zusammengefügten Wärmetauscherblock gemeinsam, eine Vorbereitungsstruktur ("Rahmen") für den sodann erfindungsgemäß zu fertigenden Header aufgebracht werden.

In allen Fällen werden die genannten Vorteile insbesondere dann erzielt, wenn ein überwiegender Teil des Headers, also wenigstens 50 %, 60 %, 70 %, 80 % oder 90 %, oder der komplette Header, aus Material gebildet wird, das mittels des additiven Fertigungsverfahrens bereitgestellt wird. Die Ausbildung mittels des additiven Fertigungsverfahrens kann beispielsweise, wie erwähnt, ausgehend von einem Rahmen, der auf einen oder mehrere, miteinander verbundene Wärmetauschermodule aufgebracht wird, vorgenommen werden.

Insbesondere kann im Rahmen des erfindungsgemäßen Verfahrens vorgesehen sein, auf Grundlage von in dem Header erwarteten Strömungsbedingungen Vorgaben zu treffen und den Header unter Verwendung des additiven Fertigungsverfahrens derart auszubilden, dass seine Geometrie im Wesentlichen den Vorgaben entspricht.

In einer besonders vorteilhaften Ausgestaltung der vorliegenden Erfindung kann als das additive Fertigungsverfahren ein Lichtbogenauftragsverfahren verwendet werden, insbesondere das sogenannte Wire Arc Additive Manufacturing (WAAM). Bei diesem Verfahren wird das Lichtbogenschweißen zum schichtweisen Aufbau eines Bauteils genutzt. Ein Metalldraht wird mithilfe eines Schweißbrenners an der richtigen Stelle verschmolzen und formt so das gewünschte Rohteil. Durch eine drehbare Bauplattform kann der Materialaufbau fünfachsig erfolgen. Durch Lichtbogenauftragsverfahren können komplexe Strukturen und Hohlräume gefertigt werden, so dass dieses Verfahren bei der Fertigung von Headern besonders vorteilhaft ist. Ein entsprechend aufgebautes Bauteil kann insbesondere durch Fräsen fertig bearbeitet werden. Auch andere andere additive Fertigungsverfahren können jedoch im Rahmen der vorliegenden Erfindung eingesetzt werden, beispielsweise das DED-Verfahren (Direct Energy Deposition), ein komplexerer 3D-Druckprozess, der typischerweise zur Reparatur oder zum Hinzufügen von zusätzlichem Material zu bereits bestehenden Komponenten eingesetzt wird. Mit dieser Technologie ist es auch möglich, Teile von Grund auf neu herzustellen.

Der gemäß der vorliegenden Erfindung bereitgestellte Rippen-Platten-Wärmetauscher weist einen Wärmetauscherpassagen aufweisenden Wärmetauscherblock und einen auf den Wärmetauscherblock aufgebrachten Header auf, wobei der Header zumindest zum Teil unter Verwendung eines additiven Fertigungsverfahrens ausgebildet ist. Der Header ist unter Verwendung des additiven Fertigungsverfahrens derart ausgebildet, dass zumindest ein Abschnitt einer Querschnittslinie einer Wandfläche des Headers an einer Querschnittsposition einen von einem Kreisabschnitt und von einem Ellipsenabschnitt abweichenden, gekrümmten Verlauf aufweist.

Zu weiteren Merkmalen und Vorteilen des erfindungsgemäßen Rippen-Platten-Wärmetauschers, der insbesondere durch ein Verfahren hergestellt sein kann, wie es zuvor erläutert wurde, sei ausdrücklich auf die Erläuterungen bezüglich des erfindungsgemäßen Verfahrens und seiner Ausgestaltungen verwiesen.

Die Erfindung wird nachfolgend unter Bezugnahme auf die beigefügten Zeichnungen näher erläutert, welche die vorliegende Erfindung und ihre Merkmale gegenüber dem Stand der Technik veranschaulichen.

### Kurze Beschreibung der Zeichnungen

Figur 1 zeigt einen nicht erfindungsgemäßen Rippen-Platten-Wärmetauscher in vereinfachter isometrischer Darstellung.
Figur 2 zeigt einen Rippen-Platten-Wärmetauscher gemäß einer Ausgestaltung der Erfindung in vereinfachter schematischer Teildarstellung.

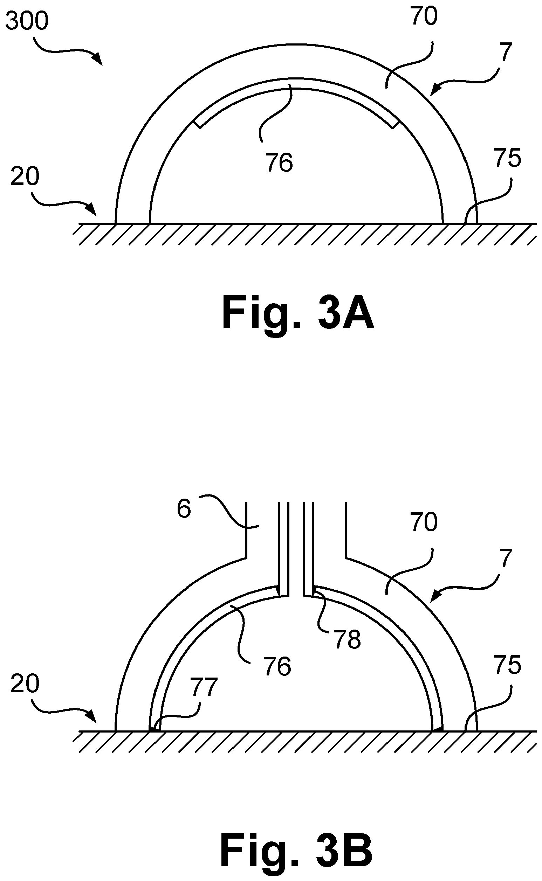

Figur 3 zeigt in Teilfiguren 3A und 3B Elemente eines Rippen-Platten-Wärmetauschers in jeweils vereinfachter schematischer Teildarstellung.
Figur 4 zeigt ein Verfahren gemäß einer Ausgestaltung der Erfindung in Form eines stark vereinfachten schematischen Ablaufplans.

### Ausführungsform(en) der Erfindung

Figur 1 wurde bereits in der Beschreibungseinleitung bei der Würdigung des Standes der Technik erläutert. Die dort verwendeten Bezugszeichen und Erläuterungen gelten auch für die nachfolgend erläuterten Figuren.

Figur 2 zeigt einen Rippen-Platten-Wärmetauscher gemäß einer Ausgestaltung der Erfindung in vereinfachter schematischer Teildarstellung. Wie zuvor ist der Rippen-Platten-Wärmetauscher mit 300 bezeichnet. Er kann, bis auf die hier explizit abweichend veranschaulichten und ausgebildeten Komponenten, identisch oder vergleichbar ausgebildet sein wie in Figur 1.

Figur 2 veranschaulicht einen Querschnitt durch einen Header 7 in einem Bereich eines ebenfalls von dem Querschnitt getroffenen (und damit seinerseits längs geschnittenen) Stutzens 6. Eine Fluidströmung durch den Stutzen 6 ist mittels eines Doppelpfeils 61 veranschaulicht. Diese richtet sich danach, ob es sich um einen Stutzen 6 zur Ein- oder Ausspeisung von Fluid handelt.

Der Header 7 ist zumindest zum Teil unter Verwendung eines additiven Fertigungsverfahrens ausgebildet, wobei hier die inneren und äußeren Wandflächen 71, 72 einer Wand 70 des Headers 7 an der gezeigten Querschnittsposition einen von einem Kreisabschnitt und von einem Ellipsenabschnitt abweichenden, gekrümmten Verlauf aufweisen. Genauer ist der von einem Kreisabschnitt und von einem Ellipsenabschnitt abweichende, gekrümmte Verlauf in der dargestellten Ausgestaltung ein Verlauf, der in zwei Abschnitten jeweils einem Verlauf einer Parabel folgt. Entsprechende Abschnitte sind hier mit 11 und 12 veranschaulicht. Dabei ist in einem ersten Krümmungsbereich entsprechend 11 der Verlauf in einer ersten Krümmungsrichtung und in einem zweiten Krümmungsbereich entsprechend 12 der Verlauf mit einer zweiten Krümmungsrichtung ausgebildet, wobei die erste und die zweite Krümmungsrichtung einander entgegengesetzt sind.

Nochmals genauer verlaufen der erste Krümmungsbereich entsprechend 11 und der zweite Krümmungsbereich entsprechend 12 jeweils entlang von Abschnitten von Parabelästen, deren scheitelpunktsferne Enden einander zugewandt sind. Auf diese Weise wird in dieser Ausgestaltung pro Seite jeweils eine S-förmige Querschnittslinie erzeugt. Zu weiteren Erläuterungen sei auf die obigen Erläuterungen verwiesen.

In der hier veranschaulichten Ausführungsform ist der Header 7 unter Verwendung des additiven Fertigungsverfahrens ferner derart ausgebildet, dass die eine Wand 70 des Headers 7 entlang ihres Verlaufs im Querschnitt unterschiedliche Wandstärken aufweist, wie hier an den Positionen 70a und 70b veranschaulicht. Auf diese Weise kann die Wandstärke gezielt den mechanischen Erfordernissen angepasst werden. An Anschweißpositionen 75 kann insbesondere eine entsprechende Verstärkung der Wand vorgesehen sein bzw. kann an dieser Position eine entsprechende Wandvorbereitung der Wand des Wärmetauscherblocks 20 erfolgen.

In den Teilfiguren 3A und 3B der Figur 2 ist veranschaulicht, wie vor der Durchführung des additiven Fertigungsverfahrens bereitgestellten Wandverstärkungselemente, hier mit 76 bezeichnet, verwendet werden können. Diese können gemäß Teilfigur 3A beispielsweise nur am höchsten Punkt des Headers 7, der hier außerhalb eines Stutzens 6 geschnitten gezeigt ist, bereitgestellt werden, um ein Schließen des Headers 7 durch additive Fertigung zu erleichtern. Gemäß Teilfigur 3B ist der gesamte Header, der hier durch den Stutzen 6 geschnitten gezeigt ist, mit einer entsprechenden Stützstruktur ausgekleidet, die an Schweißnähten 77 bzw. 78 auf dem Wärmetauscherblock 20 und mit einer Headerauskleidung verschweißt sind.

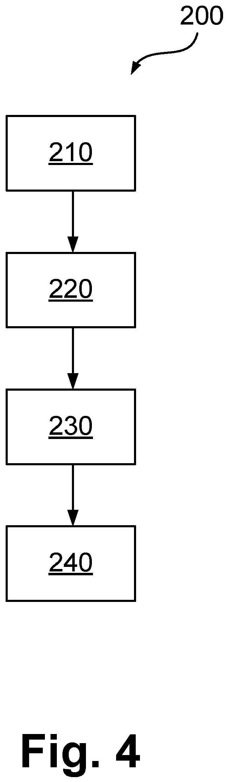

Figur 4 zeigt ein Verfahren gemäß einer Ausgestaltung der Erfindung in Form eines stark vereinfachten schematischen Ablaufplans. Das Verfahren ist insgesamt mit 200 bezeichnet. Es umfasst die Schritte 210, 220, 230 und 240.

In dem Verfahrensschritt 210 werden zur Herstellung eines Rippen-Platten-Wärmetauschers 100 ein oder mehrere Wärmetauscherblöcke 20 bereitgestellt, wie sie mehrfach zuvor erläutert wurden. Dies erfolgt insbesondere durch entsprechendes Anordnen von mit Lot versehenen Elementen übereinander. Die Elemente werden in dem Verfahrensschritt 210 insbesondere hartverlötet.

In einem Verfahrensschritt 220, der nicht Teil des erfindungsgemäßen Verfahrens sein muss, werden mehrere Wärmetauscherblöcke 20, wie sie in dem Verfahrensschritt 210 bereitgestellt wurden, optional über geeignete Verbindungselemente, als Module zu einem Gesamtblock verbunden. Auf diesem, oder optional einen einzelnen Wärmetauscherblock, können vorbereitend geeignete Strukturen wie für die nachfolgende Verarbeitung geeignete Rahmen, aufgebracht werden. Auch beispielsweise eine Aufbringung bzw. temporäre oder dauerhafte Fixierung von Stützstrukturen 76, kann in dem Verfahrensschritt 220 vorgesehen sein.

In dem Verfahrensschritt 230 wird nun der eigentliche Header 7 durch ein additives Verfahren in der mehrfach erläuterten Weise, d.h. mit der gemäß einer Ausgestaltung der Erfindung vorgesehenen gekrümmten Form, aufgebracht. Hierbei können entsprechende Stützstrukturen 76 nach der Ausbildung des Headers in dieser Weise belassen oder entfernt werden.

In dem Verfahrensschritt 240 erfolgt das Aufschweißen bzw. Anbringen weiterer Elemente, beispielsweise von Stutzen 6 an die Header 7, oder von entsprechenden Leitungen, Halteelementen und dergleichen. Auch nicht mittels additiver Fertigung bereitgestellte Header können in dem Verfahrensschritt, oder alternativ vor dem Verfahrensschritt 230, bereitgestellt werden.

## Patentansprüche

1. Verfahren (200) zur Herstellung eines Rippen-Platten-Wärmetauschers (100), bei dem ein Wärmetauscherpassagen (1) aufweisender Wärmetauscherblock (20) bereitgestellt wird, und bei dem auf den Wärmetauscherblock (20) ein Header (7) aufgebracht wird, **dadurch gekennzeichnet, dass** der Header (7) zumindest zum Teil unter Verwendung eines additiven Fertigungsverfahrens ausgebildet wird, wobei der Header (7) unter Verwendung des additiven Fertigungsverfahrens derart ausgebildet wird, dass zumindest ein Abschnitt einer Querschnittslinie einer Wandfläche (71, 72) des Headers (7) an einer Querschnittsposition einen von einem Kreisabschnitt und von einem Ellipsenabschnitt abweichenden, gekrümmten Verlauf aufweist.

2. Verfahren nach Anspruch 1, bei dem der der von einem Kreisabschnitt und von einem Ellipsenabschnitt abweichende, gekrümmte Verlauf ein Verlauf ist, der im Wesentlichen einem Abschnitt einer oder mehrerer Parabeln folgt.

3. Verfahren (200) nach Anspruch 1 oder 2, bei dem die Wandfläche (71, 72) eine Wandinnenfläche (71) und/oder eine Wandaußenfläche (72) ist.

4. Verfahren (200) nach Anspruch 1 oder Anspruch 2, bei dem die Querschnittsposition eine Position eines Querschnitts durch den Header (7) an einer Einmündung eines Stutzens (6) in den Header (7) ist.

5. Verfahren (200) nach einen der vorstehenden Ansprüche, bei dem der von einem Kreisabschnitt und von einem Ellipsenabschnitt abweichende, gekrümmte Verlauf ein Verlauf ist, der einen ersten Krümmungsbereich mit einer ersten Krümmungsrichtung und einen zweiten Krümmungsbereich mit einer zweiten Krümmungsrichtung aufweist, wobei die erste Krümmungsrichtung und die zweite Krümmungsrichtung einander entgegengesetzt sind.

6. Verfahren (200) nach Anspruch 5, bei dem der erste Krümmungsbereich und der zweite Krümmungsbereich jeweils entlang von Abschnitten von Parabelästen verlaufen, deren scheitelpunktsferne Enden einander zugewandt sind.

7. Verfahren (200) nach einen der Ansprüche 5 oder 6, bei dem der Header (7) unter Verwendung des additiven Fertigungsverfahrens derart ausgebildet wird, dass eine Wandfläche (71, 72) des Headers (7) an einer weiteren Querschnittsposition lediglich eine Krümmung in einer Krümmungsrichtung aufweist.

8. Verfahren (200) nach einem der vorstehenden Ansprüche, bei dem der Header (7) unter Verwendung des additiven Fertigungsverfahrens derart ausgebildet wird, eine Wand (70) des Headers (7) entlang ihres Verlaufs im Querschnitt unterschiedliche Wandstärken aufweist.

9. Verfahren (200) nach Anspruch 9, bei dem die unterschiedlichen Wandstärken unter Verwendung unterschiedlicher, unter Verwendung des additiven Fertigungsverfahrens aufgebrachter Materialmengen oder unter Verwendung eines vor der Durchführung des additiven Fertigungsverfahrens bereitgestellten Wandverstärkungselements bereitgestellt werden.

10. Verfahren (200) nach Anspruch 8 oder 9, bei dem der Header (7) unter Verwendung des additiven Fertigungsverfahrens derart ausgebildet wird, dass die Wand (70) des Headers (7) an Stellen geringerer Krümmung und/oder an einer Anschlussstelle zu dem Wärmetauscherblock (20) eine größere Wandstärke aufweist als im wenigstens einen anderen Bereich.

11. Verfahren (200) nach einem der vorstehenden Ansprüche, bei dem ein überwiegender Teil des Headers (7) aus Material gebildet wird, das mittels des additiven Fertigungsverfahrens bereitgestellt wird.

12. Verfahren (200) nach einem der vorstehenden Ansprüche, das umfasst, aufgrund von in dem Header (7) erwarteten Strömungsbedingungen Vorgaben zu treffen und den Header (7) unter Verwendung des additiven Fertigungsverfahrens derart auszubilden, dass seine Geometrie im Wesentlichen den Vorgaben entspricht.

13. Verfahren (200) nach einem der vorstehenden Ansprüche, bei dem als das additive Fertigungsverfahren ein Lichtbogenauftragsverfahren verwendet wird.

14. Rippen-Platten-Wärmetauscher (300), mit einem Wärmetauscherpassagen (1) aufweisenden Wärmetauscherblock (20) und auf den Wärmetauscherblock (20) aufgebrachten Headern (7) aufgebracht wird, **dadurch gekennzeichnet, dass** der Header (7) zumindest zum Teil unter Verwendung eines additiven Fertigungsverfahrens ausgebildet ist, wobei der Header (7) unter Verwendung des additiven Fertigungsverfahrens derart ausgebildet ist, dass zumindest ein Abschnitt einer Querschnittslinie einer Wandfläche (71, 72) des Headers (7) an einer Querschnittsposition einen von einem Kreisabschnitt und von einem Ellipsenabschnitt abweichenden, gekrümmten Verlauf aufweist.

15. Rippen-Platten-Wärmetauscher (300) nach Anspruch 14, der mittels eines Verfahrens gemäß einem der Ansprüche 1 bis 13 hergestellt ist.

## Claims

1. A method (200) for producing a plate-fin heat exchanger (100), wherein a heat exchanger block (20) having heat exchanger passages (1) is provided, and wherein a header (7) is applied to the heat exchanger block (20),
**characterized in that** the header (7) is formed at least in part using an additive manufacturing method, the header (7) being formed using the additive manufacturing method in such a way that at least one portion of a cross-sectional line of a wall surface (71, 72) of the header (7) has, at a cross-sectional position, a curved profile that differs from a circular segment and from an ellipse segment.

2. The method according to claim 1, wherein the curved profile that differs from a circular segment and from an ellipse segment is a profile which substantially follows a portion of one or more parabolas.

3. The method (200) according to claim 1 or 2, wherein the wall surface (71, 72) is a wall inner surface (71) and/or a wall outer surface (72).

4. The method (200) according to claim 1 or claim 2, wherein the cross-sectional position is a position of a cross-section through the header (7) at a mouth of a connection piece (6) into the header (7).

5. The method (200) according to any of the preceding claims, wherein the curved profile that differs from a circular segment and from an ellipse segment is a profile which has a first curvature region having a first curvature direction and a second curvature region having a second curvature direction, the first curvature direction and the second curvature direction being opposite to one another.

6. The method (200) according to claim 5, wherein the first curvature region and the second curvature region each extend along portions of parabolic branches, the ends of which that are remote from the vertex face one another.

7. The method (200) according to either of claims 5 or 6, wherein the header (7) is formed using the additive manufacturing method in such a way that a wall surface (71, 72) of the header (7) has, at a further cross-sectional position, only one curvature in one curvature direction.

8. The method (200) according to any of the preceding claims, wherein the header (7) is formed using the additive manufacturing method in such a way that a wall (70) of the header (7) has, along its course, different wall thicknesses in cross section.

9. The method (200) according to claim 9, wherein the different wall thicknesses are provided using different amounts of material applied using the additive manufacturing method or using a wall reinforcement element provided before carrying out the additive manufacturing method.

10. The method (200) according to claim 8 or 9, wherein the header (7) is formed using the additive manufacturing method in such a way that the wall (70) of the header (7) has a greater wall thickness at points of lower curvature and/or at a connection point to the heat exchanger block (20) than in the at least one other region.

11. The method (200) according to any of the preceding claims, wherein a predominant proportion of the header (7) is formed from material provided by means of the additive manufacturing method.

12. The method (200) according to any of the preceding claims, which comprises, due to flow conditions expected in the header (7), specifying requirements and forming the header (7) using the additive manufacturing method in such a way that its geometry substantially corresponds to the requirements.

13. The method (200) according to any of the preceding claims, wherein an electric arc application method is used as the additive manufacturing method.

14. A plate-fin heat exchanger (300), comprising a heat exchanger block (20) having heat exchanger passages (1), and headers (7) applied to the heat exchanger block (20) is applied, **characterized in that** the header (7) is formed at least in part using an additive manufacturing method, the header (7) being formed using the additive manufacturing method in such a way that at least one portion of a cross-sectional line of a wall surface (71, 72) of the header (7) has, at a cross-sectional position, a curved profile that differs from a circular segment and from an ellipse segment.

15. The plate-fin heat exchanger (300) according to claim 14, which is produced by a method according to any of claims 1 to 13.

## Revendications

1. Procédé (200) de production d'un échangeur de chaleur à plaques et ailettes (100), dans lequel un bloc d'échangeur de chaleur (20) présentant des passages d'échangeur de chaleur (1) est fourni, et dans lequel un collecteur (7) est monté sur le bloc d'échangeur de chaleur (20), **caractérisé en ce que** le collecteur (7) est formé au moins en partie à l'aide d'un procédé de fabrication additive, dans lequel le collecteur (7) est formé à l'aide du procédé de fabrication additive de telle sorte qu'au moins une section d'une ligne de section transversale d'une surface de paroi (71, 72) du collecteur (7) présente, à une position de section transversale, un tracé courbe différent d'une section circulaire et d'une section en ellipse.

2. Procédé selon la revendication 1, dans lequel le tracé courbe différent d'une section circulaire et d'une section en ellipse est un tracé qui suit sensiblement une section d'une ou de plusieurs paraboles.

3. Procédé (200) selon la revendication 1 ou 2, dans lequel la surface de paroi (71, 72) est une surface intérieure de paroi (71) et/ou une surface extérieure de paroi (72).

4. Procédé (200) selon la revendication 1 ou la revendication 2, dans lequel la position de section transversale est une position d'une section transversale à travers le collecteur (7) au niveau d'une jonction d'une tubulure (6) dans le collecteur (7).

5. Procédé (200) selon l'une des revendications précédentes, dans lequel le tracé courbe différent d'une section circulaire et d'une section en ellipse est un tracé qui présente une première zone de courbure ayant une première direction de courbure et une seconde zone de courbure ayant une seconde direction de courbure, dans lequel la première direction de courbure et la seconde direction de courbure sont opposées l'une à l'autre.

6. Procédé (200) selon la revendication 5, dans lequel la première zone de courbure et la seconde zone de courbure s'étendent respectivement le long de sections de branches paraboliques dont les extrémités éloignées du sommet se font face.

7. Procédé (200) selon l'une des revendications 5 ou 6, dans lequel le collecteur (7) est formé à l'aide du procédé de fabrication additive de telle sorte qu'une surface de paroi (71, 72) du collecteur (7) présente, à une autre position de section transversale, uniquement une courbure dans une direction de courbure.

8. Procédé (200) selon l'une des revendications précédentes, dans lequel le collecteur (7) est formé à l'aide du procédé de fabrication additive de telle sorte qu'une paroi (70) du collecteur (7) présente différentes épaisseurs de paroi le long de son tracé dans la section transversale.

9. Procédé (200) selon la revendication 9, dans lequel les différentes épaisseurs de paroi sont fournies à l'aide de différentes quantités de matériau appliquées à l'aide du procédé de fabrication additive ou à l'aide d'un élément de renforcement de paroi fourni avant la mise en oeuvre du procédé de fabrication additive.

10. Procédé (200) selon la revendication 8 ou 9, dans lequel le collecteur (7) est formé à l'aide du procédé de fabrication additive de telle sorte que la paroi (70) du collecteur (7) présente une épaisseur de paroi plus grande aux points où la courbure est plus faible et/ou à un point de raccordement au bloc d'échangeur de chaleur (20) que dans au moins une autre zone.

11. Procédé (200) selon l'une des revendications précédentes, dans lequel une partie prédominante du collecteur (7) est formée à partir d'un matériau qui est fourni au moyen du procédé de fabrication additive.

12. Procédé (200) selon l'une des revendications précédentes qui comprend, en raison de conditions d'écoulement attendues dans le collecteur (7), la définition de spécifications et la formation du collecteur (7) à l'aide du procédé de fabrication additive, de telle sorte que sa géométrie correspond sensiblement aux spécifications.

13. Procédé (200) selon l'une des revendications précédentes, dans lequel un procédé d'application d'arc électrique est utilisé comme procédé de fabrication additive.

14. Échangeur de chaleur à plaques et ailettes (300), comportant un bloc d'échangeur de chaleur (20) présentant des passages d'échangeur de chaleur (1) et des collecteurs (7) montés sur le bloc d'échangeur de chaleur (20) est appliqué, **caractérisé en ce que** le collecteur (7) est formé au moins en partie à l'aide d'un procédé de fabrication additive, dans lequel le collecteur (7) est formé à l'aide du procédé de fabrication additive de telle sorte qu'au moins une section d'une ligne de section transversale d'une surface de paroi (71, 72) du collecteur (7) présente, à une position de section transversale, un tracé courbe différent d'une section circulaire et d'une section en ellipse.

15. Échangeur de chaleur à plaques et ailettes (300) selon la revendication 14, produit au moyen d'un procédé conformément à l'une des revendications 1 à 13.
